# FASCICULE DE BREVET EUROPEEN

(11) **EP 3 696 091 B1**
(45) Date de publication et mention de la délivrance du brevet: **10.03.2021**
(21) Numéro de dépôt: 20156571.0
(22) Date de dépôt: 11.02.2020
(51) Int. Cl.: B64D 37/00, F16L 37/107, F16L 37/248, F16L 37/40, F16L 37/50

(54) **RACCORD RAPIDE DE TRANSFERT DE CARBURANT**
SCHNELLANSCHLUSS ZUM ÜBERTRAGEN VON KRAFTSTOFF
QUICK CONNECTOR FOR TRANSFERRING FUEL

(30) Priorité: 13.02.2019 FR 1901463
(43) Date de publication de la demande: 19.08.2020
(73) Titulaire: Safran Aerosystems, 78370 Plaisir (FR)
(72) Inventeur: IWANIUK, Mathieu, 76320 Caudebec-les-Elbeuf (FR); GOUEL, Sébastien, 76320 Caudebec-les-Elbeuf (FR); BULARD, Philippe, 76320 Caudebec-les-Elbeuf (FR); MENDES, Christophe, 76320 Caudebec-les-Elbeuf (FR)
(74) Mandataire: Cabinet Netter

(56) Documents cités:
- WO-A1-2017/157526
- FR-A- 1 526 167
- FR-A1- 3 012 441
- FR-A1- 3 016 950

## Description

L'invention concerne le domaine de l'approvisionnement en carburant d'un aéronef.

Un aéronef à carburant liquide, avion, hélicoptère ou autre comporte au moins réservoir installé à demeure. Le réservoir peut être situé sous les sièges d'un aéronef de transport de passagers. Lorsqu'une autonomie étendue est souhaitée, il est fait appel à un réservoir supplémentaire. Le réservoir supplémentaire peut être monté à la place d'un siège à passager préalablement retiré.

Le besoin existe de relier fluidiquement et mécaniquement un réservoir supplémentaire et un réservoir installé à demeure. La liaison fluidique permet de transférer du carburant du réservoir installé à demeure vers le réservoir supplémentaire à l'avitaillement et du réservoir supplémentaire vers le réservoir installé à demeure lors du fonctionnement de la motorisation. L'opération de remplissage est donc la même en présence et en absence du réservoir supplémentaire. L'opération de remplissage peut s'effectuer par une ouïe extérieure de l'aéronef. En d'autres termes, la liaison fluidique permet de rendre le réservoir supplémentaire transparent lors ravitaillement, tout en offrant une plus grande quantité de carburant embarqué. Le réservoir supplémentaire, tel qu'il est connu antérieurement, est démontable. Le démontage est effectué en ouvrant un panneau pour accéder à l'intérieur du réservoir, puis en libérant des organes de fixation intérieurs au réservoir Le document FR3012441 décrit un dispositif de raccord rapide de transfert de liquide pour réservoirs de carburant.

L'invention a donc pour but un dispositif robuste, de faible masse, d'encombrement limité, et de montage comme de démontage rapide.

L'invention propose un dispositif de raccord rapide de transfert de liquide dans un aéronef, comprenant un organe femelle configuré pour être relié à un premier réservoir, ledit organe femelle formant un passage et comprenant une partie cylindrique et une partie radiale, un organe mâle configuré pour être relié à un deuxième réservoir, ledit organe mâle formant un passage, monté à coulissement de manière étanche aux liquides dans l'organe femelle et comprenant une partie cylindrique et une partie radiale, et un organe de verrouillage de l'organe mâle dans l'organe femelle, l'organe de verrouillage étant disposé entre la partie radiale de l'organe femelle et la partie radiale l'organe mâle, l'organe de verrouillage entourant l'organe mâle et laissant une course limitée de coulissement à l'organe mâle par rapport à l'organe femelle, venant en prise avec l'organe femelle en position verrouillée et libérant l'organe femelle en position déverrouillée, l'organe de verrouillage comprenant un verrou de blocage axial actionnable par un mouvement axial puis rotatif et libérable par un mouvement axial puis rotatif, et un frein de rotation, le verrou et le frein étant actifs en position verrouillée.

Le dispositif offre un jeu axial important et indépendant du verrouillage en ce sens que des organes de verrouillage identiques peuvent être mis en œuvre avec des organes femelle et mâle de longueurs de coulissement différentes. Le dispositif est libre de transmission d'effort en cas de forte accélération verticale en deçà d'un seuil choisi selon les normes en vigueur. Selon l'invention, l'organe femelle comprend deux couronnes concentriques solidaires de la partie radiale de l'organe femelle. La première couronne est munie d'une pluralité de gorges en L configurées pour coopérer avec le verrou. La deuxième couronne est munie d'une première concavité s'étendant axialement sur la hauteur de ladite deuxième couronne pour l'engagement du frein et d'une deuxième concavité décalée angulairement par rapport à la première concavité et configurée pour coopérer avec le frein en position verrouillée. L'organe femelle est compact.

Dans un mode de réalisation, chaque gorge en L comprend une portion axiale ménagée sur une partie de l'épaisseur de la première couronne, une portion angulaire ménagée sur un secteur angulaire limité de la première couronne, et un ressaut dirigé vers la partie radiale de l'organe femelle, au voisinage de la portion axiale et délimitant la position verrouillée du verrou. La course angulaire est faible, d'où une manœuvre rapide.

Dans un mode de réalisation, les gorges en L sont disposées angulairement de manière irrégulière. Une position angulaire unique de verrouillage est créée.

Dans un mode de réalisation, l'une des couronnes est extérieure et munie d'ouvertures radiales à proximité de la partie radiale de l'organe femelle. Une évacuation d'eau de condensation est obtenue.

Dans un mode de réalisation, un ressort à effet axial de forme générale annulaire est disposé entre lesdites couronnes concentriques pour exercer une précontrainte axiale sur l'organe de verrouillage en position verrouillée. Le verrouillage est stable.

Dans un mode de réalisation, ledit ressort est ondulé et comprend plusieurs spires. Ledit ressort est compact.

Dans un mode de réalisation, l'organe de verrouillage comprend une jupe axiale supportant le verrou de blocage axial. Le verrou de blocage axial comprend une pluralité de dents dirigées vers l'organe femelle. Les dents sont concentriques. Chaque dent forme un secteur angulaire. Chaque dent présente des bords faisant partie de plans parallèles.

Dans un mode de réalisation, l'organe de verrouillage est réalisé en au moins deux parties. Dans un mode de réalisation, le frein comprend un ressort, annulaire ou en arc de cercle, présentant un bossage dirigé radialement vers l'extérieur et configuré pour interférer avec l'organe femelle, plus particulièrement avec une concavité ménagée dans l'organe femelle. Une double sécurité est obtenue.

L'invention propose également un réservoir de carburant équipé de la partie mâle ou de la partie femelle du dispositif de raccord rapide de transfert de liquide dans un aéronef.

Ainsi, selon un aspect de l'invention, un réservoir est muni d'un dispositif de raccord rapide de transfert de liquide dans un aéronef, comprenant un organe femelle relié audit réservoir, ledit organe femelle formant un passage et comprenant une partie cylindrique et une partie radiale, un organe mâle configuré pour être relié à un deuxième réservoir, ledit organe mâle formant un passage, configuré pour être monté à coulissement de manière étanche aux liquides dans l'organe femelle et comprenant une partie cylindrique et une partie radiale, et un organe de verrouillage de l'organe mâle dans l'organe femelle, l'organe de verrouillage étant configuré pour être disposé entre la partie radiale de l'organe femelle et la partie radiale l'organe mâle, l'organe de verrouillage étant configuré pour entourer l'organe mâle et laisser une course limitée de coulissement à l'organe mâle par rapport à l'organe femelle, venant en prise avec l'organe femelle en position verrouillée et libérant l'organe femelle en position déverrouillée, l'organe de verrouillage comprenant un verrou de blocage axial actionnable par un mouvement axial puis rotatif et libérable par un mouvement axial puis rotatif, et un frein de rotation, le verrou et le frein étant actifs en position verrouillée.

Ainsi, selon un aspect de l'invention, un réservoir est muni d'un dispositif de raccord rapide de transfert de liquide dans un aéronef, comprenant un organe femelle configuré pour être relié à un autre réservoir, ledit organe femelle formant un passage et comprenant une partie cylindrique et une partie radiale, un organe mâle configuré pour être relié audit réservoir, ledit organe mâle formant un passage, configuré pour être monté à coulissement de manière étanche aux liquides dans l'organe femelle et comprenant une partie cylindrique et une partie radiale, et un organe de verrouillage de l'organe mâle dans l'organe femelle, l'organe de verrouillage étant configuré pour être disposé entre la partie radiale de l'organe femelle et la partie radiale l'organe mâle, l'organe de verrouillage étant configuré pour entourer l'organe mâle et laisser une course limitée de coulissement à l'organe mâle par rapport à l'organe femelle, venant en prise avec l'organe femelle en position verrouillée et libérant l'organe femelle en position déverrouillée, l'organe de verrouillage comprenant un verrou de blocage axial actionnable par un mouvement axial puis rotatif et libérable par un mouvement axial puis rotatif, et un frein de rotation, le verrou et le frein étant actifs en position verrouillée.

L'invention propose également un aéronef équipé d'un dispositif de raccord rapide de transfert de liquide dans un aéronef, comprenant un organe femelle configuré pour être relié à un premier réservoir de l'aéronef, ledit organe femelle formant un passage et comprenant une partie cylindrique et une partie radiale, un organe mâle configuré pour être relié à un deuxième réservoir de l'aéronef, ledit organe mâle formant un passage, monté à coulissement de manière étanche aux liquides dans l'organe femelle et comprenant une partie cylindrique et une partie radiale, et un organe de verrouillage de l'organe mâle dans l'organe femelle, l'organe de verrouillage étant disposé entre la partie radiale de l'organe femelle et la partie radiale l'organe mâle, l'organe de verrouillage entourant l'organe mâle et laissant une course limitée de coulissement à l'organe mâle par rapport à l'organe femelle, venant en prise avec l'organe femelle en position verrouillée et libérant l'organe femelle en position déverrouillée, l'organe de verrouillage comprenant un verrou de blocage axial actionnable par un mouvement axial puis rotatif et libérable par un mouvement axial puis rotatif, et un frein de rotation, le verrou et le frein étant actifs en position verrouillée.

D'autres caractéristiques et avantages de l'invention apparaîtront à l'examen de la description détaillée ci-après, et des dessins annexés, sur lesquels :

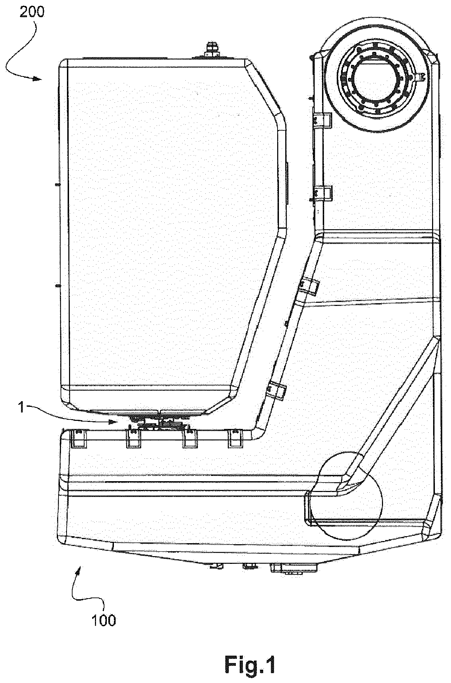

- la figure 1 illustre de façon schématique, un exemple de raccord entre deux réservoirs de carburant,
- la figure 2 illustre de façon schématique, dans une vue de face en élévation, un raccord selon un aspect de l'invention,
- la figure 3 illustre de façon schématique dans une vue en coupe axiale, le raccord de la figure 2,

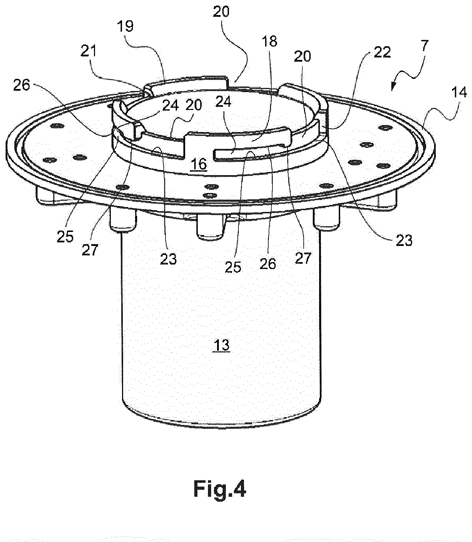

- la figure 4 illustre de façon schématique dans une vue en perspective, la partie femelle du raccord de la figure 2, couronne extérieure démontée,

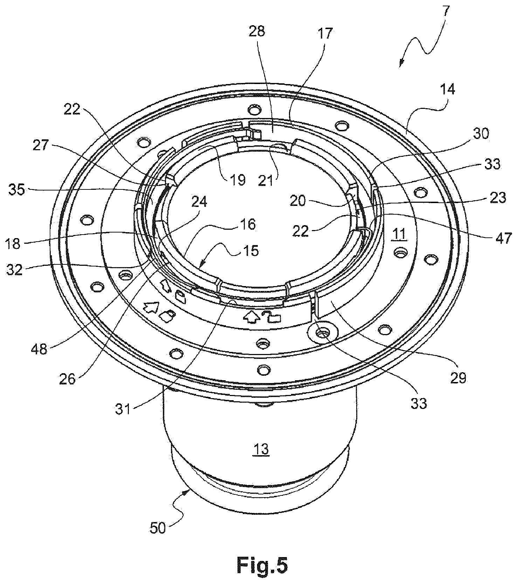

- la figure 5 illustre de façon schématique dans une vue en perspective, la partie femelle du raccord de la figure 2, couronne extérieure montée,
- la figure 6 illustre de façon schématique, dans une vue de dessus en élévation, le raccord de la figure 2,
- la figure 7 illustre de façon schématique dans une vue en perspective, le raccord de la figure 2.

Les dessins annexés pourront non seulement servir à compléter l'invention, mais aussi contribuer à sa définition, le cas échéant.

L'invention a pour but de permettre l'installation et le retrait d'un réservoir supplémentaire dans un aéronef, notamment un hélicoptère. Un aéronef comprend un ou plusieurs réservoirs fixes de fluide pour le stockage de carburant, d'huile ou d'eau. Pour certaines missions de l'aéronef, il est souhaitable d'augmenter la quantité embarquée de l'un des fluides. Ce besoin est particulièrement ressenti par les aéronefs à voilure tournante dont l'autonomie de vol ou la distance franchissable est nettement plus faible que pour les aéronefs à voilure fixe. Ainsi, un siège inoccupé ou un espace de fret laissé libre peut être utilisé pour un réservoir supplémentaire. Ceci est très utile pour des missions de longue durée par exemple en surveillance maritime ou à longue distance, par exemple un transit à charge nulle ou partielle. Il existe un besoin de monter et de démonter rapidement un réservoir supplémentaire amovible, le démontage se faisant par l'extérieur du réservoir supplémentaire amovible.

Une liaison mécanique transfère les efforts exercés par le réservoir supplémentaire au réservoir installé à demeure, notamment le poids et les efforts engendrés par l'accélération de l'aéronef. En particulier en cas de chute de l'aéronef avec percussion au sol, la liaison mécanique du réservoir supplémentaire est soumise à des efforts importants. Il est souhaitable que la liaison fluidique conserve son intégrité sous contraintes sévères. Comme on peut le voir sur les figures, le raccord 1 est prévu pour être assemblé au réservoir fixe 100 ou à une conduite de fluide d'un côté et au réservoir amovible 200 de l'autre côté. A cette fin, le raccord 1 comprend une partie fixée à demeure au réservoir fixe ou à une conduite de fluide et une partie fixée à demeure au réservoir amovible. On entend ici par fixation à demeure, une fixation qui peut être démontée pour la maintenance et reste à l'état fixé en usage normal de l'aéronef, notamment lors de sa préparation pour une mission avec ajout ou retrait du réservoir amovible. Les deux parties du raccord 1 sont prévues pour créer ensemble à l'état monté un passage de fluide d'une extrémité à une autre du raccord 1, le passage étant étanche. Le raccord 1 présente un axe de symétrie. Le raccord 1 comprend un organe mâle 2 de forme générale de révolution. L'organe mâle 2 comprend une partie cylindrique 3 et une partie radiale 4. La section en coupe axiale de l'organe mâle 2 est en L. La partie radiale 4 forme une collerette s'étendant vers l'extérieur à partir d'une extrémité de la partie cylindrique 3. La partie radiale 4 est prévue pour être fixée à un des réservoirs - fixe ou amovible. La partie radiale 4 peut être pourvue de trous pour fixation par vis-écrou audit réservoir. La partie cylindrique 3 présente un alésage annulaire. La partie cylindrique 3 présente sur sa surface extérieure un bourrelet 5 formé à proximité de l'extrémité libre opposée à la partie radiale 4. Le bourrelet 5 est en saillie vers l'extérieur. Au moins une gorge annulaire 6 est ménagée dans ledit bourrelet 5. Le bourrelet 5 porte au moins un joint torique logé dans chaque gorge 6. Le joint torique est configuré pour coopérer avec un alésage d'une autre partie du raccord, soit un organe femelle.

L'organe mâle 2 forme un passage de fluide. L'organe mâle 2 est configuré pour être monté à coulissement de manière étanche aux liquides dans l'organe femelle. Le bourrelet 5 sert de butée axiale anti séparation dans un sens. La partie radiale 4 sert de butée axiale anti enfoncement dans l'autre sens.

Le raccord 1 comprend un organe femelle 7. L'organe femelle 7 comprend une partie cylindrique 13, une partie radiale 14 et une partie de retenue 15. La section en coupe axiale de la partie cylindrique 13 et de la partie radiale 14 est en L. La partie radiale 14 forme une collerette s'étendant vers l'extérieur à partir d'une extrémité de la partie cylindrique 13. La partie radiale 14 est prévue pour être fixée à l'autre des réservoirs - amovible ou fixe. La partie radiale 14 peut être pourvue de trous pour fixation par vis-écrou audit autre réservoir. La partie cylindrique 13 présente un alésage annulaire. La partie cylindrique 13 présente un bourrelet 12 formé à proximité de l'extrémité libre opposée à la partie radiale 14. Le bourrelet 12 est en saillie vers l'intérieur. Le bourrelet 12 peut former une butée axiale. Le bourrelet 12 renforce l'extrémité libre de la partie cylindrique 13. Le bourrelet 12 est annulaire dans le mode de réalisation représenté. L'organe femelle 7 est en usage normal relié à l'autre des réservoirs. L'organe femelle 7 forme un passage de fluide.

La partie de retenue 15 est formée en saillie axiale à partir de la partie radiale 14 à l'opposé de la partie cylindrique 13. La partie de retenue 15 présente une enveloppe géométrique annulaire de section rectangulaire affleurant l'alésage de la partie cylindrique 13. En pratique, l'alésage de la partie cylindrique 13 et l'alésage de l'organe femelle 7 sont confondus.

La partie de retenue 15 comprend une couronne intérieure 16 et une couronne extérieure 17. Les formes et les fonctions des couronnes intérieure 16 et extérieure 17 peuvent être intervertis.

La couronne extérieure 17, dans le mode de réalisation représenté, est une pièce distincte de la partie radiale 14. La couronne extérieure 17est fixée de manière démontable à la partie radiale 14, par exemple par vissage. La couronne extérieure 17 forme avec une couronne annulaire radiale 11, une pièce annulaire à section en T inversé. La couronne extérieure 17 et la couronne annulaire radiale 11 sont monobloc. La couronne annulaire radiale 11 est en contact avec une surface radiale de la partie radiale 14. La couronne annulaire radiale 11 est fixée de manière démontable à la partie radiale 14, par exemple par vissage. La couronne annulaire radiale 11 présente un diamètre inférieur au diamètre de la partie radiale 14. La partie radiale 14 peut être prévue avec une gorge annulaire pour un joint. La gorge annulaire est ménagée à partir de la surface de la partie radiale 14 située du côté de la couronne annulaire radiale 11 et entre la couronne annulaire radiale 11 et le bord libre de la partie radiale 14.

La couronne intérieure 16 présente une surface intérieure formée par l'alésage de l'organe femelle 7, une surface extérieure 18 et une surface frontale 19. La surface frontale 19 est normale à l'axe. Un chanfrein peut être ménagé entre la surface frontale 19 et la surface intérieure. Une pluralité d'échancrures 20, quatre dans le mode de réalisation représenté, sont ménagées dans la surface frontale 19. Les échancrures 20 occupent des secteurs angulaires dont au moins l'un est différent des autres ou dont la répartition est inégale. Les échancrures 20 sont délimitées par des surfaces passant par l'axe de la couronne intérieure 16, également axe du raccord 1 en général.

Les échancrures 20 sont étagées en deux parties intérieure et extérieure. La partie intérieure 21 est ménagée sur une petite partie de la hauteur de la couronne intérieure 16, par exemple 20 à 30%. La partie extérieure 22 est ménagée sur une grande partie de la hauteur de la couronne intérieure 16, par exemple 80 à 90%. La partie intérieure 21 présente une dimension radiale inférieure à la dimension radiale de la partie extérieure 22. En d'autres termes, la couronne intérieure 16 présente une section, en coupe axiale au droit des échancrures 20, en marches d'escalier. La couronne intérieure 16 présente en partant de la partie radiale 14, une zone de pleine épaisseur, puis une zone d'épaisseur réduite séparée de la zone de pleine épaisseur par un redan radial plan 23. La zone d'épaisseur réduite se termine par une surface supérieure rejoignant la surface intérieure formée par l'alésage de l'organe femelle 7.

A partir de la surface extérieure 18, sont ménagées des gorges 24. Chaque gorge 24 rejoint une des échancrures 20. Les gorges 24 sont toutes disposées du même côté des échancrures 20, à gauche ou à droite. La section des gorges 24 en coupe axiale est rectangulaire. La surface inférieure 25 des gorges 24 est coplanaire et dans le prolongement des redans 23. La surface supérieure 26 des gorges 24 est généralement parallèle à la surface inférieure 25. La surface supérieure 26 des gorges 24 présente une saillie 27 dirigée vers le bas à proximité de l'échancrure 20 correspondante. Angulairement, chaque gorge 24 débouche dans une des échancrures 20 à une extrémité et est fermée à l'extrémité opposée au voisinage d'une autre des échancrures 20. Le fond des gorges 24 est annulaire, coaxial au bord de la zone d'épaisseur réduite des échancrures 20 et de même rayon. Une gorge 24 et une échancrure 20 présentent une forme en L.

La couronne extérieure 17 présente une surface intérieure 28 disposée face à la surface extérieure 18 de la couronne intérieure 16, une surface extérieure 29 et une surface frontale 30. La surface frontale 30 est normale à l'axe. La surface extérieure 29 est cylindrique de révolution. La surface intérieure 28 présente deux évidements concaves 31 et 32 s'étendant axialement sur la hauteur de la couronne extérieure 17 et angulairement sur deux secteurs angulaires voisins et distincts. Les évidements concaves 31 et 32 peuvent être séparés d'environ 3 à 10°. Hors des évidements concaves 31 et 32, la surface intérieure 28 est cylindrique de révolution.

Une pluralité de fentes 33 sont ménagées dans la couronne extérieure 17. Les fentes 33 s'étendent axialement de l'extrémité libre de la couronne extérieure 17 jusqu'à la partie radiale 14. Les fentes 33 sont droites. Les fentes 33 sont munies de bords parallèles à l'axe du raccord 1. Les fentes 33 assurent une évacuation d'eau en cas de condensation ou de pénétration d'eau entre les couronnes intérieure 16 et extérieure 17. Alternativement, les fentes 33 sont remplacées par des trous traversant la couronne extérieure 17 au voisinage de la partie radiale 14.

Entre les couronnes intérieure 16 et extérieure 17, l'organe femelle 7présente une surface annulaire 34 normale à l'axe du raccord 1. La surface annulaire 34 est radiale. La surface annulaire 34 est formée par la couronne annulaire radiale 11. Sur la surface annulaire 34, est positionné un ressort 35. Le ressort 35 est ondulé. Le ressort 35 est multispires. Le ressort 35 est maintenu par les couronnes intérieure 16 et extérieure 17.

Autour de la partie cylindrique 3 de l'organe mâle 2, est monté un organe de verrouillage 40 de l'organe mâle 2 dans l'organe femelle 3. L'organe de verrouillage 40 présente un diamètre intérieur inférieur compris entre le diamètre extérieur de la partie cylindrique 3 et le diamètre extérieur du bourrelet 5. Ainsi, à l'état monté, l'organe de verrouillage 40 est assujetti à l'organe mâle 2 avec liberté angulaire et liberté axiale limitée. L'organe de verrouillage 40 est réalisé en plusieurs parties angulaires assemblées par vissage pour permettre le montage sur la partie cylindrique 3.

L'organe de verrouillage 40 présente une collerette radiale 41 et une jupe cylindrique 42 s'étendant à partir du bord intérieur de la collerette radiale 41, d'un côté de la collerette radiale 41. L'organe de verrouillage 40 présente une section en T, la collerette radiale 41 débordant légèrement de la jupe cylindrique 42 vers l'intérieur. La collerette radiale 41 est munie de reliefs pour faciliter sa préhension par un opérateur. La collerette radiale 41 peut venir en butée contre la partie radiale 4 de l'organe mâle 2. Le bord intérieur de la collerette radiale 41 peut venir en butée contre le bourrelet 5 de l'organe mâle 2.

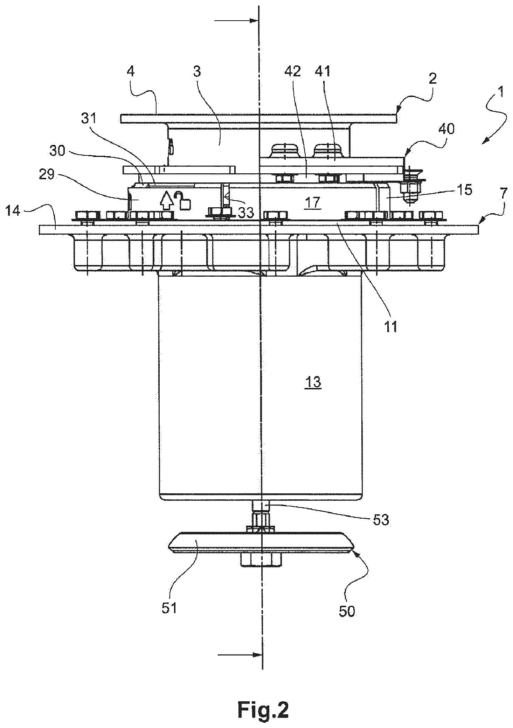

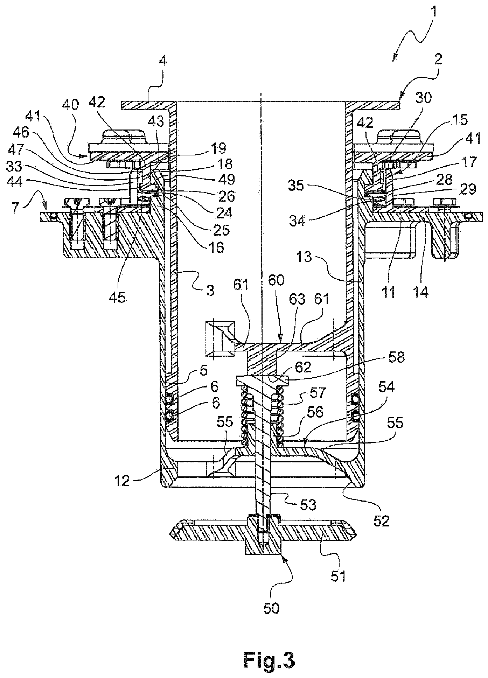

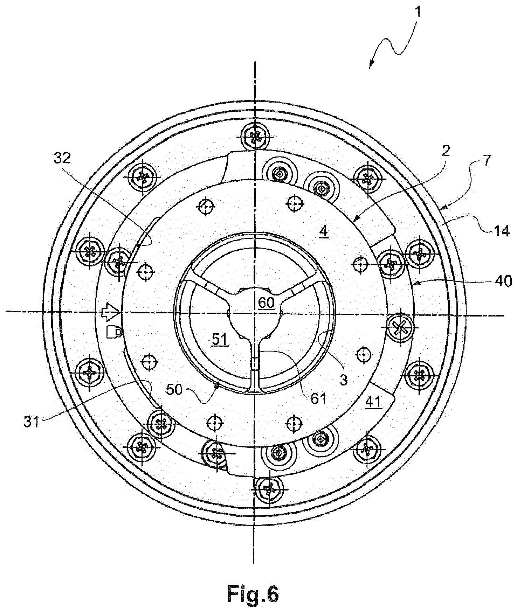

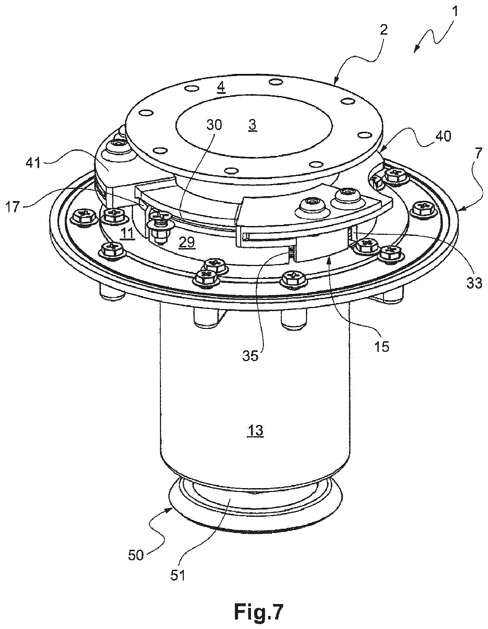

L'organe de verrouillage 40 est réalisé en plusieurs parties angulaires. Chaque partie angulaire peut comprendre une portion de collerette radiale 41 et une portion de jupe cylindrique 42. Chaque partie angulaire présente une ouverture latérale suffisante pour le montage autour de la partie cylindrique 3 ou jupe de l'organe mâle 2. Les parties angulaires sont fixées ensemble de manière démontable, par exemple par vissage de secteurs radiaux superposés, cf figures 2, 3, 6 et 7.

La jupe cylindrique 42 est configurée pour venir se loger entre la couronne intérieure 16 et la couronne extérieure 17 lors du verrouillage. La jupe cylindrique 42 présente une surface intérieure 43, une surface extérieure 44, et une surface terminale 45. La surface intérieure 43 est de forme cylindrique de révolution. La surface terminale 45 est plane. La surface terminale 45 est parallèle à la collerette radiale 41. La surface terminale 45 est normale à l'axe du raccord 1. La surface terminale 45 est opposée à la surface annulaire 34. La surface terminale 45 reçoit l'appui du ressort 35 à l'extrémité dudit ressort 35 opposée à la surface annulaire 34. Le ressort 35 tend à écarter la surface terminale 45 et la surface annulaire 34, donc à écarter l'organe de verrouillage 40 et l'organe femelle 7 l'un de l'autre.

La surface extérieure 44 est formée avec une gorge 46 ménagée sur un secteur angulaire limité. La gorge 46 présente des bords parallèles, par exemple normaux à l'axe du raccord 1. La gorge 46 présente un fond à faible profondeur. Dans la gorge 46 est logé un ressort à lame 47. Le ressort 47 est retenu par ses extrémités. Le ressort 47 présente un bossage 48 en saillie radiale hors de la gorge 46. Le bossage 48 occupe un secteur angulaire inférieur au secteur angulaire occupé par chaque évidement concave 31, 32. Le bossage 48 présente une dimension axiale par rapport à la surface extérieure 44 inférieure à la profondeur de chaque évidement concave 31, 32. Ainsi, le bossage 48 est configuré pour entrer dans l'un des évidements concaves 31 et 32 lors d'un mouvement axial, puis pour venir en saillie dans l'autre des évidements concaves 32 et 31 après une rotation. Le ressort 47 forme un frein angulaire, coopérant avec les évidements concaves dans le mode de réalisation représenté. En alternative, le ressort 47 peut coopérer avec des protubérances formant entre elles des évidements.

L'organe de verrouillage 40 comprend un verrou sous la forme d'une pluralité de dents 49 en saillie vers l'intérieur à partir de la surface intérieure 43. Les dents 49 présentent un bord coplanaire avec la surface terminale 45. Les dents 49 présentent un bord opposé situé en regard de la collerette radiale 41. Ledit bord opposé est situé dans un plan parallèle à la collerette radiale 41. Ledit bord opposé interfère, à l'état verrouillé, avec le bord supérieur des gorges 24 sous la contrainte du ressort 35.

Les dents 49 présentent des surfaces intérieures en arcs de cercle de mêmes centre et rayon. Lesdites surfaces intérieures sont de diamètre supérieur au diamètre intérieur de la collerette radiale 41. Lesdites surfaces intérieures sont de diamètre supérieur au diamètre du fond des gorges 24. Les dents 49 présentent des surfaces d'extrémité situées dans des plans passant par l'axe du raccord 1.

Les dents 49 occupent des secteurs angulaires disjoints. Les dents 49 occupent des secteurs angulaires correspondants aux secteurs angulaires des échancrures 20. Ainsi, à chaque dent 49 correspond une échancrure 20 aux tolérances près de manière que chaque dent 49 soit capable d'entrer dans l'échancrure 20 correspondante par un mouvement axial.

Simultanément à la pénétration des dents 49 dans les échancrures 20, le bossage 48 du ressort 47 entre dans l'un des évidements concaves 31 et 32. Au cours du mouvement axial relatif de l'organe de verrouillage par rapport à l'organe femelle 7, le ressort 35 est comprimé.

Puis une rotation est appliquée en maintenant un effort axial à l'encontre du ressort 35. Chaque dent 49 passe de l'échancrure 20 correspondante à l'une des gorges 24, en défilant sous la saillie 27. Le bossage 48 est comprimé radialement vers l'intérieur par la surface intérieure 28 de la couronne extérieure 17.

En fin de mouvement de rotation, chaque dent 49 a franchi la saillie 27. Le bossage 48 tend à reprendre sa forme initiale, le ressort 47 se détendant l'autre des évidements concaves 32 et 31. L'effort axial à l'encontre du ressort 35 est arrêté. La détente du ressort 35 repousse les dents 49 contre la surface supérieure 26 des gorges 24. Une rotation inverse est empêchée par la saillie 27 de chaque gorge 24.

Ainsi, l'organe de verrouillage 40 comprend un verrou de blocage axial actionnable par un mouvement axial puis rotatif et libérable par un mouvement axial puis rotatif, et un frein de rotation, le verrou et le frein étant actifs en position verrouillée. Les ressorts 35 et 47 forment une sécurité double.

Le raccord 1 comprend un clapet d'obturation 50 monté dans l'organe femelle 7. Le clapet d'obturation 50 est monté à coulissement par rapport à l'organe femelle 7, le coulissement étant selon l'axe du raccord 1. Le clapet d'obturation 50 comprend un obturateur circulaire 51 configuré pour venir en contact étanche avec un siège 52 ménagé au voisinage du bourrelet 12. Le siège 52 peut se présenter sous la forme d'un chanfrein formé entre un alésage du bourrelet 12 et l'extrémité libre de la partie cylindrique 13 de l'organe femelle 7. Le clapet d'obturation 50 comprend une tige de commande et de maintien 53 solidaire de l'obturateur circulaire 51. La tige de commande et de maintien 53 est en saillie dans l'alésage de la partie cylindrique 13. La tige de commande et de maintien 53 présente une extrémité fixée à l'obturateur circulaire 51 et une extrémité en forme de collerette 58. Le clapet d'obturation 50 présente une position d'obturation dans laquelle l'alésage de la partie cylindrique 13 de l'organe femelle 7 est fermé, et une position d'ouverture.

L'organe femelle 7 comprend un support 54 pour le clapet d'obturation 50. Le support 54 comprend au moins un, par exemple trois, bras 55 et un manchon tubulaire 56 central. Le manchon tubulaire 56 est coaxial à la partie cylindrique 13 de l'organe femelle 7. Le ou les bras 55 s'étendent radialement entre le manchon tubulaire 56 et le bourrelet 12 et laissent libre un passage de fluide dans le sens axial. La tige de commande et de maintien 53 est de diamètre adapté pour se déplacer dans l'alésage du manchon tubulaire 56. Un ressort 57 est monté autour de la tige de commande et de maintien 53 et autour du manchon tubulaire 56. Le ressort 57 tend à fermer le clapet d'obturation 50. Le ressort 57 est, ici, en appui d'un côté sur le ou les bras 55 ou sur une collerette disposée entre le ou les bras 55 et le manchon tubulaire 56 et de l'autre côté sur la collerette 58. Le ressort 57 exerce un effort permanent sur la tige de commande et de maintien 53, en position d'obturation et en position d'ouverture. Le support 54 est monobloc avec la partie cylindrique 13.

L'organe mâle 2 comprend un poussoir 60 agissant sur le clapet d'obturation 50. Le poussoir 60 présente une structure analogue à la structure du support 54. Le poussoir 60 comprend au moins un, par exemple trois, bras 61 et une surface de butée 62, ici formée par un pion 63 central. La surface de butée 62 est normale à l'axe du raccord 1. Le ou les bras 61 s'étendent radialement entre le pion 63 et l'alésage de la partie cylindrique 3. Le poussoir 60 est monobloc avec la partie cylindrique 3.

Le ou les bras 61 laissent libre un passage de fluide dans le sens axial. La surface de butée 62 du poussoir 60 est positionnée axialement de façon que, dans la position illustrée sur les figures 2, 3 et 7 correspondant à des réservoirs fixe et amovible connectés, le clapet d'obturation 50 soit ouvert par appui de la surface de butée 62 sur la collerette 58 du côté opposée au ressort 57. L'obturateur circulaire 51 est alors distant du siège 52.

Lors du démontage du réservoir amovible, l'organe mâle 2 est retiré par un mouvement axial écartant la partie radiale 4 et la partie radiale 14. Le clapet d'obturation 50 accompagne ledit mouvement axial jusqu'à ce que le clapet d'obturation 50 soit arrêté par le siège 52. La surface de butée 62 se sépare alors de la collerette 58. Le clapet d'obturation 50 est fermé avant la sortie de l'organe mâle 2 hors de l'organe femelle 7, plus précisément avant la sortie du joint torique de la gorge 6 hors de l'alésage de la partie cylindrique 13. Le ressort 57 reste en précontrainte pour assurer une bonne obturation.

Dans le sens inverse, l'organe mâle 2 est inséré dans l'organe femelle 7. Le joint torique de la gorge 6 vient dans l'alésage de la partie cylindrique 13 et assure l'étanchéité. Puis, le poussoir 60 entre en contact avec le clapet d'obturation 50. Plus précisément, la surface de butée 62 pousse la collerette 58, d'où le déplacement du clapet d'obturation 50 avec l'organe mâle 2, la compression du ressort 57 et l'ouverture du passage de fluide. Dans cette position axiale illustrée sur les figures 2, 3 et 7, l'organe de verrouillage 40 peut être manœuvré par rotation vers la position verrouillée, assurant la connexion stable entre les réservoirs fixe et amovible.

Ainsi, le raccord 1 comprend un clapet d'obturation 50 à manœuvre indexée mécaniquement sur la position relative des organes mâle et femelle. Le clapet d'obturation 50 est capable d'obturer l'un des réservoirs de manière automatique à la déconnexion. L'opérateur ne se voit pas imposer d'effectuer une étape supplémentaire d'obturation.

L'invention ne se limite pas aux exemples de procédé et d'appareil décrits ci-avant, seulement à titre d'exemple, mais elle englobe toutes les variantes que pourra envisager l'homme de l'art dans le cadre des revendications ci-après.

## Revendications

1. Dispositif de raccord (1) rapide de transfert de liquide pour aéronef, comprenant un organe femelle (7) configuré pour être relié à un premier réservoir, ledit organe femelle (7) formant un passage et comprenant une partie cylindrique (13) et une partie radiale (14), un organe mâle (2) configuré pour être relié à un deuxième réservoir, ledit organe mâle (2) formant un passage, monté à coulissement de manière étanche aux liquides dans l'organe femelle (7) et comprenant une partie cylindrique (3) et une partie radiale (4), et un organe de verrouillage (40) de l'organe mâle (2) dans l'organe femelle (7), l'organe de verrouillage (40) étant disposé entre la partie radiale (14) de l'organe femelle (7) et la partie radiale (4) de l'organe mâle (2), l'organe de verrouillage (40) entourant l'organe mâle (2) et laissant une course limitée de coulissement à l'organe mâle (2) par rapport à l'organe femelle (7), venant en prise avec l'organe femelle (7) en position verrouillée et libérant l'organe femelle (7) en position déverrouillée, l'organe de verrouillage (40) comprenant un verrou de blocage axial actionnable par un mouvement axial puis rotatif et libérable par un mouvement axial puis rotatif, et un frein de rotation, le verrou de blocage axial et le frein de rotation étant actifs en position verrouillée, l'organe femelle (7) comprenant deux couronnes concentriques solidaires de la partie radiale (14) de l'organe femelle (7), la première couronne (16) étant munie d'une pluralité de gorges en L configurées pour coopérer avec le verrou, la deuxième couronne (17) étant munie d'une première concavité (31) s'étendant axialement sur la hauteur de ladite deuxième couronne (17) pour l'engagement du frein et d'une deuxième concavité (32) décalée angulairement par rapport à la première concavité (31) et configurée pour coopérer avec le frein en position verrouillée.

2. Dispositif selon la revendication 1, dans lequel chaque gorge en L comprend une portion axiale (20) ménagée sur une partie de l'épaisseur de la première couronne (16), une portion angulaire (24) ménagée sur un secteur angulaire limité de la première couronne (16), et un ressaut (27) dirigé vers la partie radiale (14) de l'organe femelle (7), au voisinage de la portion axiale et délimitant la position verrouillée du verrou.

3. Dispositif selon la revendication 1 ou 2, dans lequel les gorges en L sont disposées angulairement de manière irrégulière.

4. Dispositif selon la revendication 1, 2 ou 3, dans lequel l'une des couronnes est extérieure et munie d'ouvertures radiales (33) à proximité de la partie radiale (14) de l'organe femelle (7).

5. Dispositif selon l'une des revendications 1 à 4, dans lequel un ressort (35) à effet axial de forme générale annulaire est disposé entre lesdites couronnes concentriques (16, 17) pour exercer une précontrainte axiale sur l'organe de verrouillage (40) en position verrouillée.

6. Dispositif selon la revendication 5, dans lequel ledit ressort (35) est ondulé et comprend plusieurs spires.

7. Dispositif selon l'une des revendications précédentes, dans lequel l'organe de verrouillage (40) comprend une jupe axiale (42) supportant le verrou de blocage axial et le verrou de blocage axial comprend une pluralité de dents (49) dirigées vers l'organe femelle (7), les dents étant concentriques, chaque dent (49) formant un secteur angulaire et présentant des bords faisant partie de plans parallèles.

8. Dispositif selon l'une des revendications précédentes, dans lequel l'organe de verrouillage (40) est réalisé en au moins deux parties.

9. Dispositif selon l'une des revendications précédentes, dans lequel le frein comprend un ressort (47), annulaire ou en arc de cercle, présentant un bossage (48) dirigé radialement vers l'extérieur et configuré pour interférer avec l'organe femelle (7), plus particulièrement avec une concavité ménagée dans l'organe femelle (7).

## Patentansprüche

1. Schnellanschlussvorrichtung (1) zum Übertragen einer Flüssigkeit für ein Luftfahrzeug, umfassend ein Buchsenorgan (7), das ausgestaltet ist, mit einem ersten Tank verbunden zu werden, wobei das Buchsenorgan (7) einen Durchlass bildet und einen zylindrischen Teil (13) und einen radialen Teil (14) umfasst, ein Steckorgan (2), das ausgestaltet ist, mit einem zweiten Tank verbunden zu werden, wobei das Steckorgan (2) einen Durchlass bildet, gleitend und flüssigkeitsdicht in dem Buchsenorgan (7) montiert ist und einen zylindrischen Teil (3) und einen radialen Teil (4) umfasst, und ein Verriegelungsorgan (40) für das Steckorgan (2) in dem Buchsenorgan (7), wobei das Verriegelungsorgan (40) zwischen dem radialen Teil (14) des Buchsenorgans (7) und dem radialen Teil (4) des Steckorgans (2) angeordnet ist, wobei das Verriegelungsorgan (40) das Steckorgan (2) umgibt und einen begrenzten Hub zum Gleiten des Steckorgans (2) in Bezug auf das Buchsenorgan (7) zulässt, wobei es in verriegelter Position mit dem Buchsenorgan (7) in Eingriff steht und in entriegelter Position das Buchsenorgan (7) freigibt, wobei das Verriegelungsorgan (40) einen Riegel zur axialen Sperre umfasst, der durch eine axiale und dann drehende Bewegung betätigt und durch eine axiale und dann drehende Bewegung freigegeben werden kann, und eine Drehbremse, wobei der Riegel zur axialen Sperre und die Drehbremse in verriegelter Position aktiv sind, wobei das Buchsenorgan (7) zwei konzentrische Kränze umfasst, die mit dem radialen Teil (14) des Buchsenorgans (7) fest verbunden sind, wobei der erste Kranz (16) mit einer Vielzahl von Ausnehmungen in L-Form versehen ist, die ausgestaltet sind, mit dem Riegel zusammenzuwirken, wobei der zweite Kranz (17) mit einer ersten Konkavität (31) versehen ist, die sich axial auf der Höhe des zweiten Kranzes (17) für den Eingriff der Bremse erstreckt, und mit einer zweiten Konkavität (32), die winkelmäßig in Bezug auf die erste Konkavität (31) versetzt und ausgestaltet ist, mit der Bremse in verriegelter Position zusammenzuwirken.

2. Vorrichtung nach Anspruch 1, wobei jede Ausnehmung in L-Form einen axialen Abschnitt (20) umfasst, der auf einem Teil der Dicke des ersten Kranzes (16) eingerichtet ist, einen Winkelabschnitt (24), der auf einem begrenzten Winkelsektor des ersten Kranzes (16) eingerichtet ist, und einen Vorsprung (27), der zu dem radialen Teil (14) des Buchsenorgans (7) hin gerichtet ist, in der Nähe des axialen Abschnitts und die verriegelte Position des Riegels begrenzend.

3. Vorrichtung nach Anspruch 1 oder 2, wobei die Ausnehmungen in L-Form winkelmäßig unregelmäßig angeordnet sind.

4. Vorrichtung nach Anspruch 1, 2 oder 3, wobei einer der Kränze außen liegt und mit radialen Öffnungen (33) in der Nähe des radialen Teils (14) des Buchsenorgans (7) versehen ist.

5. Vorrichtung nach einem der Ansprüche 1 bis 4, wobei eine im Allgemeinen ringförmige Feder (35) mit axialer Wirkung zwischen den konzentrischen Kränzen (16, 17) angeordnet ist, um eine axiale Vorspannung auf das Verriegelungsorgan (40) in verriegelter Position auszuüben.

6. Vorrichtung nach Anspruch 5, wobei die Feder (35) gewellt ist und mehrere Windungen umfasst.

7. Vorrichtung nach einem der vorstehenden Ansprüche, wobei das Verriegelungsorgan (40) eine axiale Schürze (42) umfasst, die den Riegel zur axialen Sperre stützt, und der Riegel zur axialen Sperre eine Vielzahl von Zähnen (49) umfasst, die zu dem Buchsenorgan (7) hin gerichtet sind, wobei die Zähne konzentrisch sind, wobei jeder Zahn (49) einen Winkelsektor bildet und Ränder aufweist, die Teil von parallelen Ebenen sind.

8. Vorrichtung nach einem der vorstehenden Ansprüche, wobei das Verriegelungsorgan (40) aus mindestens zwei Teilen hergestellt ist.

9. Vorrichtung nach einem der vorstehenden Ansprüche, wobei die Bremse eine Feder (47) umfasst, die ring- oder kreisbogenförmig ist, einen Buckel (48) aufweist, der radial nach außen gerichtet und ausgestaltet ist, mit dem Buchsenorgan (7), insbesondere mit einer Konkavität, die in dem Buchsenorgan (7) eingerichtet ist, in Eingriff zu treten.

## Claims

1. Quick coupling (1) device for transferring liquid for an aircraft, comprising a female member (7) configured to be connected to a first reservoir, said female member (7) forming a passage and comprising a cylindrical portion (13) and a radial portion (14), a male member (2) configured to be connected to a second reservoir, said male member (2) forming a passage, slidably mounted in a liquid-tight manner in the female member (7) and comprising a cylindrical portion (3) and a radial portion (4), and a member (40) for locking the male member (2) in the female member (7), the locking member (40) being disposed between the radial portion (14) of the female member (7) and the radial portion (4) of the male member (2), the locking member (40) surrounding the male member (2) and leaving a limited sliding extent for the male member (2) with respect to the female member (7), engaging with the female member (7) in the locked position and releasing the female member (7) in the unlocked position, the locking member (40) comprising an axial blocking lock that can be actuated by an axial then rotating movement and that can be released by an axial then rotating movement, and a rotation brake, the axial blocking lock and the rotation brake being active in the locked position, the female member (7) comprising two concentric rings integral with the radial portion (14) of the female member (7), the first ring (16) being provided with a plurality of L-shaped grooves configured to cooperate with the lock, the second ring (17) being provided with a first concavity (31) extending axially over the height of said second ring (17) for the engagement of the brake and of a second concavity (32) angularly offset with respect to the first concavity (31) and configured to cooperate with the brake in the locked position.

2. Device according to claim 1, wherein each L-shaped groove comprises an axial portion (20) arranged on a portion of the thickness of the first ring (16), an angular portion (24) arranged on a limited angular sector of the first ring (16), and a projection (27) directed towards the radial portion (14) of the female member (7), in the vicinity of the axial portion and delimiting the locked position of the lock.

3. Device according to claim 1 or 2, wherein the L-shaped grooves are disposed angularly in an irregular manner.

4. Device according to claim 1, 2 or 3, wherein one of the rings is external and provided with radial openings (33) in the vicinity of the radial portion (14) of the female member (7).

5. Device according to one of claims 1 to 4, wherein an axial-effect spring (35) of a generally annular shape is disposed between said concentric rings (16, 17) to exert an axial prestress on the locking member (40) in the locked position.

6. Device according to claim 5, wherein said spring (35) is undulated and comprises several windings.

7. Device according to one of the preceding claims, wherein the locking member (40) comprises an axial skirt (42) supporting the axial blocking lock and the axial blocking lock comprises a plurality of teeth (49) directed towards the female member (7), the teeth being concentric, each tooth (49) forming an angular sector and having edges that are part of parallel planes.

8. Device according to one of the preceding claims, wherein the locking member (40) is made from at least two portions.

9. Device according to one of the preceding claims, wherein the brake comprises a spring (47), annular or as an arc of a circle, having a boss (48) directed radially outwards and configured to interfere with the female member (7), more particularly with a concavity arranged in the female member (7).
